# EUROPEAN PATENT SPECIFICATION

(11) **EP 3 567 243 B1**
(45) Date of publication and mention of the grant of the patent: **28.01.2026**
(21) Application number: 18382324.4
(22) Date of filing: 11.05.2018
(51) Int. Cl.: F03D 1/06

(54) **WIND TURBINE BLADE LEADING EDGE PROTECTION**
WINDTURBINENBLATTVORDERKANTENSCHUTZ
PROTECTION DE BORD D'ATTAQUE DE PALE DE TURBINE ÉOLIENNE

(43) Date of publication of application: 13.11.2019
(73) Proprietor: General Electric Renovables España, S.L., 08005 Barcelona (ES)
(72) Inventor: PICARD, Thomas, 08005 Barcelona (ES); CANAL VILA, Marc, 08005 Barcelona (ES)
(74) Representative: Bardehle Pagenberg S.L.

(56) References cited:
- EP-A1- 2 799 709
- EP-A1- 2 801 720
- EP-A1- 2 824 320
- EP-A1- 3 144 525
- WO-A1-2013/060722
- GB-A- 2 464 163
- US-A1- 2011 142 673
- US-B2- 9 752 559

## Description

The present disclosure relates to leading edge protectors configured to reduce blade erosion, particularly for wind turbine blades. The present disclosure further relates to wind turbines comprising such protectors.

### BACKGROUND

Modern wind turbines are commonly used to supply electricity into the electrical grid. Wind turbine blades are typically attached, at a blade root portion, to a rotor hub, either directly or through an extender, i.e. a cylindrical element arranged between the blade root portion and the hub to increase the diameter of the rotor swept area. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid.

Wind turbine blades are typically designed for optimum aerodynamic conditions to optimize the wind turbine's performance for maximum generation of electricity. However, in addition to operational loads, wind turbine blades are also subjected to a wide variety of harsh environmental conditions, particularly including conditions of abrasive particles such as (but not limited to) rain droplets, dust particles, sand particles, insects, salt (especially in off-shore wind turbines) and/or other substances. These abrasive particles impinging upon the blade surface, particularly upon the leading edge, may have an adverse effect thereon causing wear of the blade surface, particularly of its leading edge. It is known to protect the leading edge of a blade with a so-called leading edge protector.

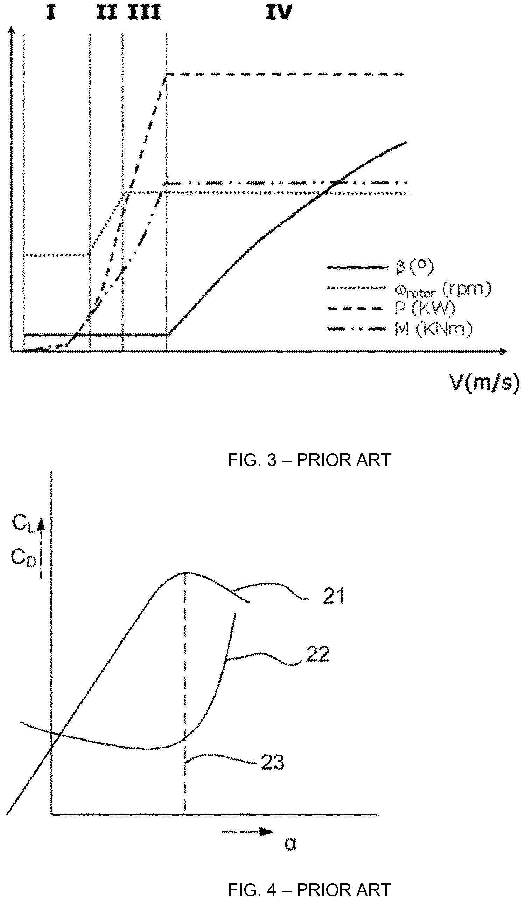

It is known that lift and drag coefficient of a wind turbine may vary as a function of the angle of attack of a blade section. Generally, the lift coefficient (reference sign 21 of figure 4) increases to a certain maximum at a so-called critical angle of attack 23. This critical angle of attack 23 is also sometimes referred to as stall angle. The drag coefficient (reference sign 22) may generally be quite low and starts increasing in an important manner close to the critical angle of attack 23. This rapid change in aerodynamic behaviour of a profile or blade section is generally linked to the phenomenon that the aerodynamic flow around the profile (or blade section) is not able to follow the aerodynamic contour and the flow separates from the profile. The separation causes a wake of turbulent flow, which reduces the lift of a profile and increases the drag significantly.

The exact curves of the lift coefficient and drag coefficient may vary significantly in accordance with the aerodynamic profile chosen. However, in general, regardless of the aerodynamic profile chosen, a trend to increasing lift up until the critical angle of attack and also a rapid increase in drag after the critical angle of attack can be found.

It can thus be understood that with increasing angle of attack, the lift coefficient of the profile increases, until "stall". If the angle of attack is increased further, the lift coefficient is reduced and the inflection point is known as stall angle. During operation, whenever the blades become e.g. eroded, the lift coefficient of the profile starts to "flatten" before reaching the "stall" condition. Moreover, stall may be reached at a smaller angle of attack. This reduces efficiency of the wind turbine thus resulting in loss of power production.

Using leading edge protectors (LEP) as described above may extend lifetime of blades leading edges to a certain extent. However, in harsh environmental conditions the leading edge protectors get corroded too thereby leading to e.g. limitations in tangential velocity of tip speed (e.g. to 90 m/s) which involves annual energy production (AEP) drops. To reduce corrosion of LEPs, LEPs with a certain thickness are being developed to further extend their lifetime. However, the use of LEPs with a certain thickness involve a sudden or abrupt step when in use, at the backwards facing ends of the LEPs that are directed towards the blade trailing edge section. These sudden steps may cause an uncontrolled transition from laminar to turbulent flow, i.e. whereas a laminar boundary layer would be arranged around a blade without a LEP for a significant part of the chord, a blade with a thick LEP (for the same wind speed, and the same angle of attack) could have a turbulent boundary layer. This means that airflow of the boundary layer is more prone to separation than in blades which do not comprise a thick LEPs thereby decreasing aerodynamic efficiency of these rotor blades.

In order to smoothly transition from the leading edge protector or shell into the blade surface, document EP3144525 discloses leading edge shells having a thickness gradually decreasing in at least one of the backwards facing ends. In some examples, at least one of the thickness gradually decreasing backwards facing ends comprises means for re-energizing and/or stabilizing the boundary layer of airflow downstream of the leading edge shell.

Document US20110006165 describes a film or erosion protection material placed on the airfoil to provide a medium for the incorporation of planform edge vortex generators. The film edge is shaped to have a regular series of V shapes facing away from the leading edge towards the trailing edge.

There thus still exists a need for improved LEPs configured to increase wind turbine efficiency at the same time as blade erosion is avoided or at least reduced.

### SUMMARY

In accordance with a first aspect, a leading edge protector for a wind turbine blade according to claim 1 is provided. The leading edge protector is configured to at least partially cover a blade leading edge section. The leading edge protector comprises a main body having a substantially constant thickness and having a trailing end. The leading edge protector further comprises a plurality of irregularities arranged on an outer surface of the main body, upstream from the trailing end and configured to energize a boundary layer.

According to this aspect, an incident air stream encounters irregularities, e.g. recesses or protrusions that because of their geometry can energize the boundary layer around the blade, in particular by creating turbulence. This extra energy is added on a portion of the LEP having a constant thickness and occurs upstream from the main body trailing end. Put in other words, prior to e.g. a joint or sealing portion or transition between the leading edge protector and the blade surface. In use, with the LEP covering a blade leading edge section, the irregularities can reduce blade drag by partially recovering the tip vortex energy, thereby diminishing (or at least delaying) flow separation thus allowing the wind turbine blade to enhance lift and improve blade efficiency.

Put in other words, the irregularities can create local regions of turbulent airflow over the surface of the leading edge protector of the blade as a means to delay flow separation and thus optimize aerodynamic airflow around the blade contour. Since the irregularities energize the boundary layer before the airflow passes through the LEP (trailing) end, it is easier for the flow to recover when it effectively passes over the LEP trailing end, i.e. its edge, joint (with the blade outer surface) or sealing portion. Also noise may be reduced because of this.

### BRIEF DESCRIPTION OF THE DRAWINGS

Non-limiting examples of the present disclosure will be described in the following, with reference to the appended drawings, in which:
Figure 1 illustrates a perspective view of one example of a wind turbine;
Figure 2 illustrates a simplified, internal view of one example of the nacelle of the wind turbine of the Figure 1;
Figure 3 shows a typical power curve of a wind turbine;
Figure 4 shows in a very general manner how the lift coefficient and drag coefficient may vary as a function of the angle of attack of a blade section;
Figure 5 shows a rotor blade profile with a leading edge protector;
Figure 6 shows an enlargement of the leading edge protector of figure 5;
Figure 7 shows an enlargement of a leading edge protector according to another example; and
Figure 8 shows an example of a pair of protrusions arranged on a portion of a leading edge protector.

### DETAILED DESCRIPTION OF EXAMPLES

In these figures the same reference signs have been used to designate matching elements.

Reference will now be made in detail to examples, one or more of which are illustrated in the drawings. Each example is provided by way of explanation of the disclosure, not limitation of thereof. In fact, it will be apparent to those skilled in the art that various modifications and variations can be made without departing from the scope of the invention. For instance, features illustrated or described as part of one example can be used with another example to yield a still further example. Thus, it is intended that the present disclosure covers such modifications and variations as come within the scope of the appended claims and their equivalents.

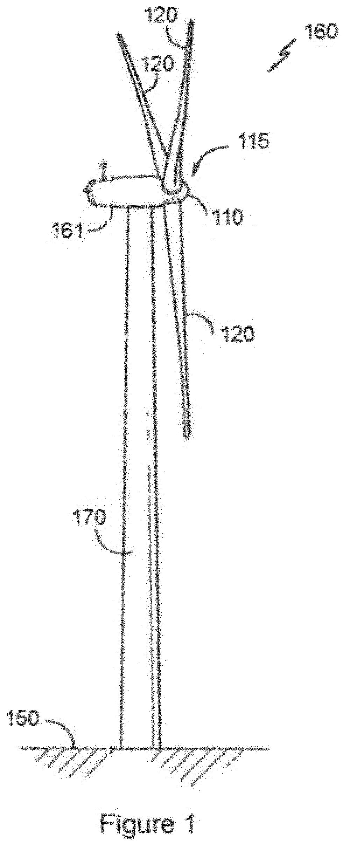

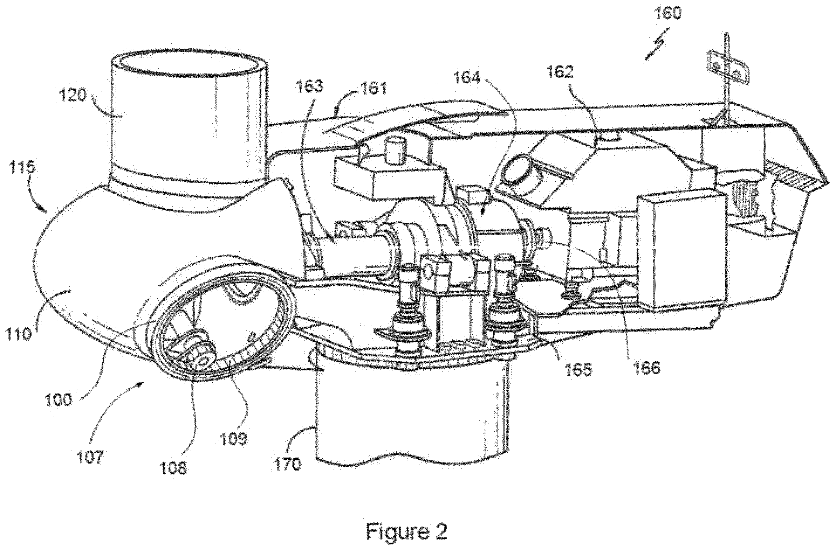

Figure 1 illustrates a perspective view of one example of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. Particularly in the example of figure 1, the rotor 115 includes three rotor blades 120. However, in alternative examples, the rotor 115 may include more or less rotor blades. Each rotor blade 120 may be spaced about the hub 110 to facilitate rotating the rotor 115 to enable kinetic energy to be transferred from the wind into usable mechanical energy, and subsequently, electrical energy. For instance, the hub 110 may be rotatably coupled to an electric generator 162 (Figure 2) positioned within the nacelle 161 to allow electrical energy to be produced.

Figure 2 illustrates a simplified, internal view of one example of the nacelle 161 of the wind turbine 160 of the Figure 1. As shown, the generator 162 is disposed within the nacelle 161. In general, the generator 162 may be coupled to the rotor 115 of the wind turbine 160 for generating electrical power from the rotational energy generated by the rotor 115. In this example, the rotor 115 includes a main rotor shaft 163 coupled to the hub 110 for rotation therewith. The generator 162 is then coupled to the rotor shaft 163 such that rotation of the rotor shaft 163 drives the generator 162. Further in this example, the generator 162 includes a generator shaft 166 rotatably coupled to the rotor shaft 163 through a gearbox 164.

Further in this example, the rotor shaft 163, gearbox 164, and generator 162 are supported within the nacelle 161 by a support frame or bedplate 165 positioned atop the wind turbine tower 170. Other ways of supporting the rotor shaft, gearbox and generator inside the nacelle may be foreseen.

Blades 120 are coupled to the hub 110 with a pitch bearing 100 provided between the blade 120 and the hub 110. The pitch bearing 100 comprises an inner bearing ring and an outer bearing ring mounted so as to allow both bearing rings to rotate relative to each other. A wind turbine blade may be attached either at the inner bearing ring or at the outer bearing ring, whereas the hub is attached to the other of the inner and outer bearing rings. A blade may thus perform a relative rotational movement with respect to the hub when a pitch system 107 is actuated. The pitch system 107 shown in the example of figure 2 comprises a pinion 108 that meshes with an annular gear 109 provided on the inner bearing ring to set the wind turbine blade into rotation.

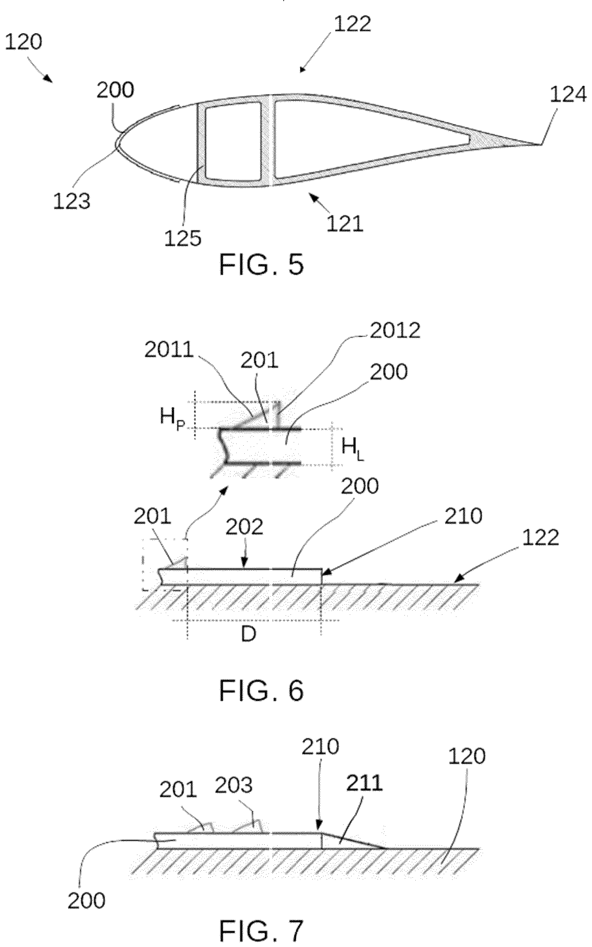

Figure 5 shows a cross-sectional view of a wind turbine rotor blade 120 with a leading edge protector 200 according to an example. The rotor blade 120 comprises surfaces defining a pressure side 121 and, a suction side 122. The rotor further comprises a leading edge 123 and a trailing edge 124 extending between a tip and a root portion of the blade.

A spar box 125 is arranged inside the blade in order to maintain the distance between an inner surface of the blade suction side 122 and an inner surface of the blade pressure side 121. The spar box 125 may support wind loads acting on the blades, and in particular, the bending loads acting on the blade. In alternative examples, the spar box may be replaced by an I-beam spar, a C-shaped spar or any other substantially rigid structure having other cross-sectional shapes.

According to this example, the leading edge 123 is covered by a leading edge protector 200 that also covers a portion of the pressure and suction sides 121, 122 blade surfaces, towards the trailing edge 124. The leading edge protector is configured to protect the blade leading edge 123 and neighbouring areas defining a blade leading edge section, from erosion due to impacts e.g. from particulate matter, such as sand, rain droplets, dust, bugs, hail, rain droplets, marine environmental conditions or any other harsh environmental condition.

The leading edge protector may be provided along an outer portion of the blade, in particular the outer 40% of the blade span, more specifically the outer 33% or 25% of the blade span may have a leading edge protector. In particular, a threshold for an apparent wind speed (a combination of free flow wind speed and speed of rotation of a blade section) may be defined, and the section of the blade for which the apparent wind speed threshold may be exceeded may be provided with a leading edge protector.

The leading edge protector may cover 5 - 30% of the chord of the local airfoil, and more specifically 10 - 25% of the local airfoil. The proportion of the local airfoil that is covered by vary over the blade span. Particularly, in the tip area, the proportion of the local area covered by a leading edge protector may increase. In some examples, the leading edge protector may have a constant length, but since the chord of the blade decreases closer to the tip, the proportion of the tip covered by the protector can increase.

The dimensions of the leading edge protector may be adapted for each specific case. The dimensions in relation to the span and chord commented above may apply to any of the examples herein disclosed.

Figures 6 and 7 each show an enlargement of a portion of the leading edge protector according to different examples. In these examples, the leading edge protector comprises a main body having substantially constant thickness H_{L} and protrusions 201 provided on the main body outer surface 202. In examples, two consecutive protrusions may be spaced apart from each other in a span wise direction. Particularly, a distance from around 1 to 10 times their height, more particularly around 1 to 6 times their height. In alternative examples, instead of protrusions, recesses may be foreseen or combinations of protrusions and recesses.

The example of figure 6 shows the leading edge protector 200 with the protrusions 201 provided in a single row along a span wise direction on its outer surface 202. In alternative examples, other number of rows of protrusions may be foreseen, see e.g. figure 7. In these examples, consecutive pairs of consecutive protrusions may be configured to divert incident air stream towards each other.

In the example of figures 6 and 7, the protrusions 201 are arranged upstream and distanced apart a distance D from a trailing end 210 of the main body of the leading edge protector 200. An aspect of having protrusions embedded in the LEP is that the turbulences they create in the incoming flow also reduce degradation and/or erosion of the transition area LEP-blade surface thereby allowing for lower sealing qualities in this area. This is of special interest, in offshore wind turbines, particularly when the LEP is being repaired *in situ.*

The enlarged detail of figure 6 shows that in some examples, the protrusions may have a height H_{P} that is around 0.1% to around 1% of the local blade chord. This provides for protrusions with a shape or geometry that is configured to generate vortices and/or turbulence such that an incident airflow boundary layer is reenergized before reaching the trailing end 210.

In more examples, the height of the protrusions may be in the range from 3 mm to 20 mm, as a function of the blade chord and span dimensions. Variations in length and/or heights and/or positions may also be possible.

An aspect of having protrusions, i.e. shapes or geometries that extend vertically/upwards, is that the protrusions tend to catch higher (upper) layers of the incoming airflow. These upper layers may then be mixed within the boundary layer thereby re-energizing it. The distance D thereby provides for the space in a chord wise direction in which the upper layers can be mixed with the boundary layer of incoming airflow.

Throughout the present description and claims, the *protrusions* may be regarded as "vortex or micro-vortex generator geometries" provided at the outer surface of the leading edge protector, particularly at its main body outer surface. These geometries provide for an increase of the energy conversion efficiency during normal operation of the wind turbine by increasing the lift force of the blades while decreasing their drag force. In herein disclosed examples, the protrusions serve to increase the attached-flow region and to reduce the detached-flow region by moving (advancing) boundary layer flow separation towards the leading edge of the blade.

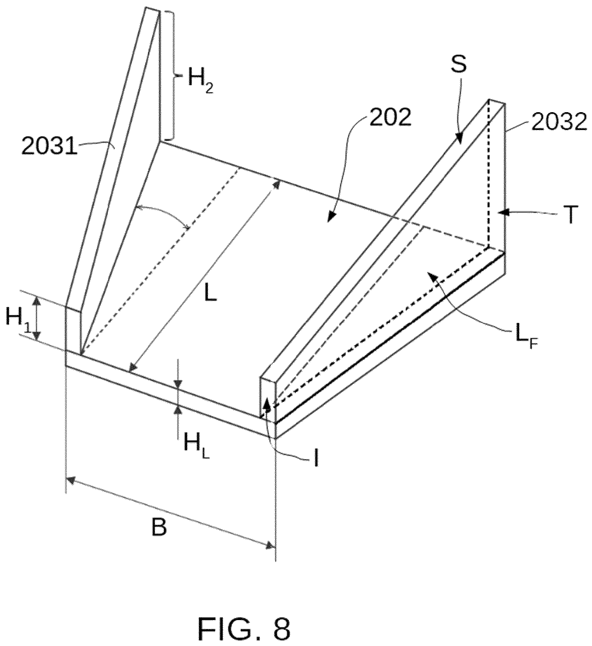

Further in the example of figure 6, the protrusions 201 have triangular shape, particularly involving an incident protrusion slope 2011 facing the blade leading edge having an inclination of around 10° to 30° degrees with respect to the outer surface 202 of the main body of the leading edge protector 200, particularly around 15° to 25°. In an example, the inclination may be around 20°. In some examples, the incident protrusion slope 2011 that faces the blade leading edge has a different inclination than the rear slope 2012 that faces a blade trailing edge (see numeric reference 124 of figure 5). In further examples, the protrusions may have other shapes and/or sizes, including different inclinations and/or they may be arranged in pairs as will be explained in connection with the example of figure 8.

The example of figure 7 differs from that of figure 6 in that the trailing end 210 of the leading edge protector 200, i.e. a joint leading edge protector-blade surface, is no longer substantially straight but it comprises a sealing portion 211 downstream from the trailing end 210 of the main body. The sealing portion 211 comprises a gradually decreasing thickness in a downstream direction towards the blade trailing edge (see numeric reference 124 of figure 5), although it should be clear that the sealing portion will typically not actually reach the trailing edge of the blade.

The example of figure 7 further differs from that of figure 6 in that two rows of protrusions 201, 203 are provided. The two rows of protrusions 201, 203 are spaced apart from each other in a chord wise direction, particularly a distance ranging from around 1 to 20 times the length of the protrusions. In alternatives, two consecutive protrusions may be spaced apart from each other in a span wise direction and/or combinations thereof may be foreseen. Other numbers of rows of protrusions may also be foreseen.

Figure 8 shows an example of protrusions 2031, 2032 arranged in pairs, on an outer surface 202 of the LEP. In this example, the protrusions 2031, 2032 are angled from each other such that the pair as a whole is arranged in a truncated V-shaped configuration. The truncated V-shaped configuration may have a different section (width or separation) B along a length L of the protrusions 2031, 2032. In use e.g. when the LEP is mounted on a wind turbine blade, the pair of protrusions may be arranged such that the truncated V-shaped configuration has its narrower section B oriented towards the blade leading edge.

Particularly in this example, the protrusions 2031, 2032 have a substantially trapezoid prismatic shape with an incident face I and a trailing face T. The incident I and trailing T faces protrude from the LEP's outer surface 202 and have a substantially rectangular shape. In addition, connecting distal ends of the incident I and trailing T faces define a slope face S also having a substantially rectangular shape. A straight bottom face (not shown) may form part of the LEP outer surface in those cases in which the protrusions are integrally built with the LEP. Between all these faces the protrusions 2031, 2032 further comprise lateral faces L_{F} having a trapezoid shape.

Further in this example, the incident I and trailing T faces are both arranged at substantially 90° with respect to the LEP outer surface 202, i.e. they are substantially straight or vertical faces with respect to the LEP outer surface 202. Further in this example, a height H₁ of the incident face I is shorter than a height H₂ of the trailing face T. Such a height relationship defines an angle of inclination of the slope face S with respect to an imaginary line parallel to the LEP outer surface 202. In examples, the angle of inclination of the slope face S may be around 10° to 30° degrees, particularly in the range from 15° to 25°. In a particular example, angles of inclination of around 20° may be foreseen.

Even though not explicitly disclosed in the hereinbefore shown examples, the irregularities configured to energize a boundary layer may be recesses instead of protrusions as well. In particular, in some examples, dimples may be foreseen. The recesses or dimples or other surface texture may introduce sufficient roughness, to mix the boundary layer and transform a boundary layer to a turbulent layer in a similar manner as protrusions do. Combinations of recesses and protrusions may also be foreseen.

In some examples, the dimples may be arranged in multiple span-wise rows. Alternatively, the dimples may be arranged in diagonal rows, or in a squama arrangement.

In all examples, the leading edge protectors may be made of e.g. a polyurethane material. An adhesive layer may be provided on the inner layer of the polyurethane material for adhesion to the blade surface. In examples, the polyurethane material may be prepared from a polyol, butanediol and an isocyanate.

In some examples, the irregularities may be made embedded in a tape. These examples are thus quite easy to retrofit in existing wind turbines having LEPs if needed.

In some examples, the irregularities may be integrally formed with the LEP. The protrusion may be formed in an injection moulding process together with the remainder of the LEP.

In another aspect, a method for retrofitting a wind turbine having a rotor with a plurality of blades, wherein one or more blades have a leading edge protector and the method comprises applying protrusions e.g. embedded in a tape such that a LEP substantially as herein disclosed is provided.

In still another aspect, wind turbine blades comprising leading edge protectors substantially as herein disclosed are provided.

In all examples disclosed herein, the main body may have a suction side portion to cover a suction side of the blade leading edge section and a pressure side portion to cover a pressure side of the blade leading edge section. In some of these examples, the protrusions may be provided on the suction side portion of the main body. In others, both the suction side and pressure side portions of the main body may be provided with protrusions as disclosed herein.

In all examples disclosed herein, the irregularities configured to energize the boundary layer may be provided at a chord wise distance to the trailing end of the main body of the leading edge protector in the range from 10% to 100% of the chord that is covered by the LEP, i.e. distance from the leading edge). This means that in examples, the irregularities (protrusions / recesses) may be arranged or applied substantially on the trailing end, i.e. at the LEP trailing edge.

In a specific case, the number and arrangement of irregularities may be determined on the basis of the effect that the leading edge protector (without irregularities) can have on the aerodynamic flow around the blade, and to the extent to which the irregularities can avoid this.

In all examples disclosed herein, the irregularities may be integrally formed with the leading edge protector. Manufacturing and assembly may be simplified in this manner.

In all examples disclosed herein, two or more protrusions may have different shapes and/or sizes.

In another aspect, a wind turbine blade may be provided. The blade comprises surfaces defining a pressure side and a suction side opposite to the pressure side. The surfaces extend between a leading edge and a trailing edge in a chord wise direction. The blade further comprises a leading edge protector attached to an outer surface of a blade leading edge section. The leading edge protector comprises a main body having a substantially constant thickness and having a trailing end, and a plurality of protrusions being arranged on an outer surface of the main body upstream from the trailing end towards the blade leading edge.

In some examples, the leading edge protector may further comprise a sealing portion downstream from the trailing end of the main body. A thickness of the sealing portion may decrease gradually in a downstream direction towards the blade trailing edge.

In some examples, the main body may have a suction side portion that covers a suction side of the blade leading edge section and a pressure side portion that covers a pressure side of the blade leading edge section. In these examples, the protrusions may be provided on the suction side portion of the leading edge protector of the main body of the leading edge protector. In some examples, the protrusions may be provided on both, the suction side portion and the pressure side portion of the main body of the leading edge protector.

In another aspect, a wind turbine blade may be provided. The blade comprises surfaces defining a pressure side and a suction side opposite to the pressure side. The surfaces extend between a leading edge and a trailing edge in a chord wise direction. The blade further comprises a leading edge protector attached to an outer surface of a blade leading edge section. The leading edge protector comprises a main body having a substantially constant thickness and having a trailing end, and a sealing portion downstream from the trailing end of the main body. A thickness of the sealing portion decrease gradually in a downstream direction towards the blade trailing edge. The leading edge protector further comprises a plurality of protrusions integrally formed with the main body of the leading edge protector. The protrusions are formed on an outer surface of the main body upstream from the trailing end towards the blade leading edge.

In some of these examples, the main body may have a suction side portion that covers a suction side of the blade leading edge section and a pressure side portion that covers a pressure side of the blade leading edge section. The protrusions may be provided on the suction side portion of the leading edge protector of the main body of the leading edge protector. In some examples, the protrusions may further be provided on the pressure side portion of the main body of the leading edge protector.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims.

Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A leading edge protector (200) for a wind turbine blade, the leading edge protector (200) being configured to protect a blade leading edge (123) from erosion and to at least partially cover a blade leading edge section, and comprising
a main body having a substantially constant thickness (H_{L}) and having a trailing end (210),
a sealing portion (211) downstream from the trailing end (210) of the main body, and
a plurality of irregularities (201; 203; 2031-2032) arranged on an outer surface (202) of the main body upstream from the trailing end (210) and configured to energize a boundary layer.

2. The leading edge protector of claim 1, wherein the plurality of irregularities configured to energize the boundary layer are protrusions.

3. The leading edge protector of claim 2, wherein the protrusions (201; 203; 2031-2032) are integrally formed with the leading edge protector (200).

4. The leading edge protector of claim 2 or 3, wherein the protrusions (201; 203; 2031-2032) have a height in the range from 3 mm to 20 mm.

5. The leading edge protector of any of claims 2 - 4, wherein two consecutive protrusions are spaced apart from each other in a span wise direction, particularly a distance from 1 to 10 times a height of the protrusions, more specifically from 1 to 6 times the height of the protrusions.

6. The leading edge protector of any of claims 2 - 5, wherein consecutive protrusions are arranged in a row along a span wise direction, wherein pairs of consecutive protrusions are configured to divert an aerodynamic flow towards each other.

7. The leading edge protector of any of claims 2 - 6, wherein the protrusions (201; 203) comprise an incident slope (2011) that in use faces a blade leading edge and has an inclination of around 10° to 30° degrees with respect to the outer surface of the main body, more specifically around 15° to 25°.

8. The leading edge protector of any of claims 2 -7, wherein the protrusions (201; 203) comprise an incident slope (2011) that in use faces a blade leading edge and has a different inclination than a backwards slope (2012) that in use faces a blade trailing edge.

9. The leading edge protector of claim 1, wherein the plurality of irregularities are dimples or local recesses.

10. The leading edge protector of any of claims 1 - 9, wherein a thickness of the sealing portion (211) decreases gradually in a downstream direction.

11. The leading edge protector of any of claims 1 - 10, wherein the main body has a suction side portion to cover a suction side (122) of the blade leading edge section and a pressure side portion to cover a pressure side (121) of the blade leading edge section.

12. The leading edge protector of claim 11, wherein the irregularities (201; 203; 2031-2032) are provided on the suction side portion of the main body of the leading edge protector (200).

13. The leading edge protector of claim 12, wherein the irregularities (201; 203; 2031-2032) are provided on both the suction side portion and the pressure side portion of the main body of the leading edge protector (200).

14. The leading edge protector of any of claims 1 - 13, comprising multiple rows of irregularities along a span wise direction, wherein two consecutive rows are spaced apart from each other in a chord wise direction, particularly a distance from around 1 to 20 times a length of the protrusions.

15. A wind turbine blade (120) comprising surfaces defining a pressure side (121) and a suction side (122), the surfaces extending between a leading edge (123) and a trailing edge (124) in a chord wise direction, wherein the blade (120) further comprises a leading edge protector according to any of claims 1 - 14.

## Patentansprüche

1. Vorderkantenschutz (200) für ein Windturbinenblatt, wobei der Vorderkantenschutz (200) so konfiguriert ist, dass er die Vorderkante (123) eines Blattes vor Erosion schützt und zumindest teilweise einen vorderen Kantenabschnitt des Blattes abdeckt, und umfasst
einen Hauptkörper mit einer im Wesentlichen konstanten Dicke (H_{L} ) und einem hinteren Ende (210),
einen Dichtungsabschnitt (211) stromabwärts vom hinteren Ende (210) des Hauptkörpers und
eine Vielzahl von Unregelmäßigkeiten (201; 203; 2031-2032), die auf einer Außenfläche (202) des Hauptkörpers stromaufwärts vom hinteren Ende (210) angeordnet sind und so konfiguriert sind, dass sie eine Grenzschicht anregen.

2. Der Vorderkantenschutz gemäß Anspruch 1, wobei die Vielzahl von Unebenheiten, die zum Anregen der Grenzschicht konfiguriert sind, Vorsprünge sind.

3. Der Vorderkantenschutz gemäß Anspruch 2, wobei die Vorsprünge (201; 203; 2031-2032) integral mit dem Vorderkantenschutz (200) ausgebildet sind.

4. Vorderkantenschutz gemäß Anspruch 2 oder 3, wobei die Vorsprünge (201; 203; 2031-2032) eine Höhe im Bereich von 3 mm bis 20 mm aufweisen.

5. Der Vorderkantenschutz nach einem der Ansprüche 2 bis 4, wobei zwei aufeinanderfolgende Vorsprünge in Spannweitenrichtung voneinander beabstandet sind, insbesondere um einen Abstand, der das 1- bis 10-fache der Höhe der Vorsprünge beträgt, genauer gesagt das 1- bis 6-fache der Höhe der Vorsprünge.

6. Der Vorderkantenschutz gemäß einem der Ansprüche 2 bis 5, wobei aufeinanderfolgende Vorsprünge in einer Reihe entlang einer Spannweitenrichtung angeordnet sind, wobei Paare aufeinanderfolgender Vorsprünge so konfiguriert sind, dass sie eine aerodynamische Strömung zueinander umlenken.

7. Der Vorderkantenschutz gemäß einem der Ansprüche 2 bis 6, wobei die Vorsprünge (201; 203) eine Anstellneigung (2011) aufweisen, die im Gebrauch einer Blattspitzenkante zugewandt ist und eine Neigung von etwa 10° bis 30° in Bezug auf die Außenfläche des Hauptkörpers aufweist, genauer gesagt etwa 15° bis 25°.

8. Der Vorderkantenschutz gemäß einem der Ansprüche 2 bis 7, wobei die Vorsprünge (201; 203) eine Anfallneigung (2011) aufweisen, die im Gebrauch einer Blattspitzenkante zugewandt ist und eine andere Neigung als eine Rückwärtsneigung (2012) aufweist, die im Gebrauch einer Blattnachlaufkante zugewandt ist.

9. Der Vorderkantenschutz gemäß Anspruch 1, wobei die Vielzahl von Unregelmäßigkeiten Vertiefungen oder lokale Aussparungen sind.

10. Der Vorderkantenschutz gemäß einem der Ansprüche 1 bis 9, wobei die Dicke des Dichtungsabschnitts (211) in Strömungsrichtung allmählich abnimmt.

11. Der Vorderkantenschutz gemäß einem der Ansprüche 1 bis 10, wobei der Hauptkörper einen Saugseitenteil zum Abdecken einer Saugseite (122) des Blattevorderkantenteils und einen Druckseitenteil zum Abdecken einer Druckseite (121) des Blattevorderkantenteils aufweist.

12. Der Vorderkantenschutz gemäß Anspruch 11, wobei die Unregelmäßigkeiten (201; 203; 2031-2032) an dem Saugseitenteil des Hauptkörpers des Vorderkantenschutzes (200) vorgesehen sind.

13. Der Vorderkantenschutz gemäß Anspruch 12, wobei die Unregelmäßigkeiten (201; 203; 2031-2032) sowohl auf dem Saugseitenteil als auch auf dem Druckseitenteil des Hauptkörpers des Vorderkantenschutzes (200) vorgesehen sind.

14. Der Vorderkantenschutz gemäß einem der Ansprüche 1 bis 13, der mehrere Reihen von Unregelmäßigkeiten entlang einer Spannweitenrichtung umfasst, wobei zwei aufeinanderfolgende Reihen in einer Sehnenrichtung voneinander beabstandet sind, insbesondere um einen Abstand von etwa dem 1- bis 20-fachen der Länge der Vorsprünge.

15. Windturbinenblatt (120) mit Oberflächen, die eine Druckseite (121) und eine Saugseite (122) definieren, wobei sich die Oberflächen zwischen einer Vorderkante (123) und einer Hinterkante (124) in Sehnenrichtung erstrecken, wobei das Blatt (120) ferner einen Vorderkantenschutz gemäß einem der Ansprüche 1 bis 14 umfasst.

## Revendications

1. Protecteur de bord d'attaque (200) pour une pale d'éolienne, le protecteur de bord d'attaque (200) étant configuré pour protéger un bord d'attaque de pale (123) contre l'érosion et pour recouvrir au moins partiellement une section de bord d'attaque de pale, et comprenant
un corps principal ayant une épaisseur sensiblement constante (H_{L}) et comportant une extrémité arrière (210),
une partie d'étanchéité (211) en aval de l'extrémité arrière (210) du corps principal, et
une pluralité d'irrégularités (201 ; 203 ; 2031-2032) disposées sur une surface extérieure (202) du corps principal en amont de l'extrémité arrière (210) et d'une configuration conçue pour dynamiser une couche limite.

2. Protecteur de bord d'attaque selon la revendication 1, dans lequel la pluralité d'irrégularités configurées pour dynamiser la couche limite sont des saillies.

3. Protecteur de bord d'attaque selon la revendication 2, dans lequel les saillies (201; 203 ; 2031-2032) sont formées d'un seul tenant avec le protecteur de bord d'attaque (200).

4. Protecteur de bord d'attaque selon la revendication 2 ou 3, dans lequel les saillies (201 ; 203 ; 2031-2032) ont une hauteur comprise entre 3 mm et 20 mm.

5. Protecteur de bord d'attaque selon l'une quelconque des revendications 2 à 4, dans lequel deux saillies consécutives sont espacées l'une de l'autre dans le sens de la portée, en particulier d'une distance comprise entre 1 et 10 fois la hauteur des saillies, plus précisément entre 1 et 6 fois la hauteur des saillies.

6. Protecteur de bord d'attaque selon l'une quelconque des revendications 2 à 5, dans lequel des saillies consécutives sont disposées en rangée dans le sens de l'envergure, dans lequel des paires de saillies consécutives sont configurées pour dévier un flux aérodynamique l'une vers l'autre.

7. Protecteur de bord d'attaque selon l'une quelconque des revendications 2 à 6, dans lequel les saillies (201 ; 203) comprennent une pente incidente (2011) qui, en utilisation, fait face à un bord d'attaque de pale et présente une inclinaison d'environ 10° à 30° par rapport à la surface extérieure du corps principal, plus spécifiquement d'environ 15° à 25°.

8. Protecteur de bord d'attaque selon l'une quelconque des revendications 2 à 7, dans lequel les saillies (201 ; 203) comprennent une pente incidente (2011) qui, en utilisation, fait face à un bord d'attaque de pale et présente une inclinaison différente d'une pente arrière (2012) qui, en utilisation, fait face à un bord de fuite de pale.

9. Protecteur de bord d'attaque selon la revendication 1, dans lequel la pluralité d'irrégularités sont des fossettes ou des renfoncements locaux.

10. Protecteur de bord d'attaque selon l'une quelconque des revendications 1 à 9, dans lequel l'épaisseur de la partie d'étanchéité (211) diminue progressivement dans le sens aval.

11. Protecteur de bord d'attaque selon l'une quelconque des revendications 1 à 10, dans lequel le corps principal comporte une partie côté aspiration pour recouvrir un côté aspiration (122) de la section de bord d'attaque de l'aube et une partie côté pression pour recouvrir un côté pression (121) de la section de bord d'attaque de l'aube.

12. Protecteur de bord d'attaque selon la revendication 11, dans lequel les irrégularités (201 ; 203 ; 2031-2032) sont prévues sur la partie côté aspiration du corps principal du protecteur de bord d'attaque (200).

13. Protecteur de bord d'attaque selon la revendication 12, dans lequel les irrégularités (201 ; 203 ; 2031-2032) sont prévues à la fois sur la partie côté aspiration et sur la partie côté pression du corps principal du protecteur de bord d'attaque (200).

14. Protecteur de bord d'attaque selon l'une quelconque des revendications 1 à 13, comprenant plusieurs rangées d'irrégularités le long d'une direction transversale, dans lequel deux rangées consécutives sont espacées l'une de l'autre dans une direction cordale, en particulier d'une distance d'environ 1 à 20 fois la longueur des saillies.

15. Pale d'éolienne (120) comprenant des surfaces définissant un côté pression (121) et un côté aspiration (122), les surfaces s'étendant entre un bord d'attaque (123) et un bord de fuite (124) dans le sens de la corde, dans laquelle la pale (120) comprend en outre un protecteur de bord d'attaque selon l'une quelconque des revendications 1 à 14.
